# EUROPÄISCHE PATENTSCHRIFT

(11) **EP 0 787 251 B1**
(45) Veröffentlichungstag und Bekanntmachung des Hinweises auf die Patenterteilung: **27.10.1999**
(21) Anmeldenummer: 93905079.5
(22) Anmeldetag: 15.03.1993
(51) Int. Cl.: F02B 53/02, F01C 11/00, F02B 57/08

(54) **VERBRENNUNGSKRAFTMASCHINE**
INTERNAL COMBUSTION ENGINE
MOTEUR A COMBUSTION INTERNE

(30) Priorität: 13.03.1992 AT 51392
(43) Veröffentlichungstag der Anmeldung: 06.08.1997
(73) Patentinhaber: GRABNER, Johann, Josef, A-4841 Ungenach (AT); Bauer, Johannes, 4351 Saxen (AT)
(72) Erfinder: Grabner, Johann Josef, 4841 Ungenach (AT); Ennser, Nikolaus, 4600 Wels (AT)
(74) Vertreter: Hehenberger, Reinhard, Dipl.-Ing.
(86) Internationale Anmeldenummer: AT9300047
(87) Internationale Veröffentlichungsnummer: WO9318286

(56) Entgegenhaltungen:
- WO-A-87/07326
- WO-A-88/08074

## Beschreibung

Die Erfindung betrifft eine Verbrennungskraftmaschine, mit einer im wesentlichen zylindrischen Kolbenkammer, in der eine Kolbenführung mit wenigstens einer im wesentlichen radial ausgerichteten Zylinderbohrung drehbar gelagert ist, mit wenigstens einem Kolben, der in der Zylinderbohrung geführt ist und mit der Wand der Zylinderbohrung und der Wand der Kolbenkammer zumindest phasenweise einen Kompressionsraum einschließt, mit einer Einrichtung, über welche der Kolben beim Drehen der Kolbenführung periodisch hin- und herbewegt wird, und mit einer mit der Kolbenführung über ein Getriebe verbundenen Turbine, die von Verbrennungsgasen aus einem Brennraum angetrieben wird.

Eine gattungsgemäße Verbrennungskraftmaschine ist aus der US-A-4 056 930 bekannt. Nachteilig bei der bekannten Verbrennungskraftmaschine ist es, daß die periodische Bewegung der Kolben in der Kolbenführung über eine elliptische Gleitführung erfolgt, in der die Kolben über T-förmige Gleitelemente geführt sind. Dabei entsteht insbesondere während der Kompressionsphase eine sehr hohe Gleitreibung, die sich einerseits auf den Wirkungsgrad der Maschine negativ auswirkt und anderseits einen hohen Verschleiß der Gleitteile bewirkt.

Aus der WO 88/08074 ist ein Verbrennungsmotor mit mindestens einem sich in einer zylindrischen Kolbenbohrung hin und her bewegenden Kolben bekannt, der über ein Pleuel auf eine drehbar gelagerte Kurbelwelle einwirkt. Die Kolbenbohrung ist in einem Läufer angeordnet, der in einem Gehäuse drehbar gelagert ist. Läufer und Kurbelwelle sind durch ein Getriebe bewegungsmäßig derart miteinander gekuppelt, daß sie in entgegengesetzten Drehrichtungen umlaufen. Die Verbrennung erfolgt bei diesem Verbrennungsmotor direkt in den Kolbenbohrungen.

Die WO 87/07326 offenbart eine Verbrennungskraftmaschine mit einer im wesentlichen zylindrischen Kolbenkammer, in der eine Kolbenführung mit drei im wesentlichen radial ausgerichteten Zylinderbohrungen drehbar gelagert ist, in welchen Kolben, die mit der Wand der Zylinderbohrung und der Wand der Kolbenkammer zumindest phasenweise einen Kompressionsraum einschließen, periodisch hin- und herbewegt werden. Die Kolbenführung ist in der Kolbenkammer exzentrisch gelagert und die Kolben stützen sich an der Wand der Kolbenkammer ab, wodurch sie bei Drehung der Kolbenführung radial hin- und herbewegt werden. Die Kolbenführung ist mit einer Turbine, die von Verbrennungsgasen aus einem Brennraum angetrieben wird, mit einer Welle verbunden.

Aufgabe der Erfindung ist es, eine gattungsgemäße Verbrennungskraftmaschine zur Verfügung zu stellen, die technisch einfach aufgebaut ist und mit hohem Wirkungsgrad betrieben werden kann.

Gelöst wird diese Aufgabe bei einer gattungsgemäßen Verbrennungskraftmaschine gemäß der Erfindung dadurch, daß in der Kolbenkammer exzentrisch ein ortsfestes Lager vorgesehen ist, mit dem der Kolben über eine Pleuelstange verbunden ist. Durch diese Anordnung läßt sich die Bewegung der Kolben in der Kolbenführung besonders einfach steuern.

Gemäß einer bevorzugten Ausführungsform der Erfindung kann vorgesehen sein, daß die Turbine ein Flügelzellenrad mit wenigstens einer radial verschiebbaren Lamelle aufweist. Auf diese Weise läßt sich die Druckenergie der Verbrennungsgase besonders einfach in mechanische Energie umetzen.

Wenn gemäß der Erfindung vorgesehen ist, daß in der Wand der Kolbenkammer in jenem Bereich eine Öffnung zur Turbine vorgesehen ist, in dem sich der Kolben radial am weitesten außen befindet und daß sich die Lamelle der Turbine in Drehrichtung vor der Öffnung radial weiter innen befindet als nach der Öffnung, dann ist gewährleistet, daß die Maschine mit hohem Wirkungsgrad arbeitet.

Gemäß einer besonders bevorzugten Ausführungsform ist die erfindungsgemäße Verbrennungskraftmaschine dadurch gekennzeichnet, daß zwei einander diametral gegenüberliegende Kolben vorgesehen sind. Gemäß einer Ausführungsform der Erfindung kann vorgesehen sein, daß die Anzahl der Lamellen der Anzahl der Kolben entspricht. Die Anzahl der Lamellen bestimmt sich in erster Linie aus dem Drehzahlverhältnis der Turbine und der Kolbenführung. Wenn z.B. die Drehzahl der Turbine doppelt so groß ist wie die der Kolbenführung, muß die Turbine nur halb soviele Lamellen aufweisen wie Kolben vorgesehen sind. Umgekehrt müssen z.B. doppelt soviele Lamellen wie Kolben vorgesehen sein, wenn die Drehzahl der Turbine halb so groß wie die der Kolbenführung ist. Das Drehzahlverhältnis bestimmt sich in erster Linie durch die Optimierung des Wirkungsgrades bzw. der gewünschten Ausgangsdrehzahl der Turbine.

Weitere Merkmale und Vorteile der Erfindung ergeben sich aus den Unteransprüchen und der nachfolgenden Beschreibung eines Ausführungsbeispieles unter Bezugnahme auf die Zeichnungen. Es zeigt:
Fig. 1 einen Schnitt durch die erfindungsgemäße Verbrennungskraftmaschine entlang der Linie I-I in Fig. 3,

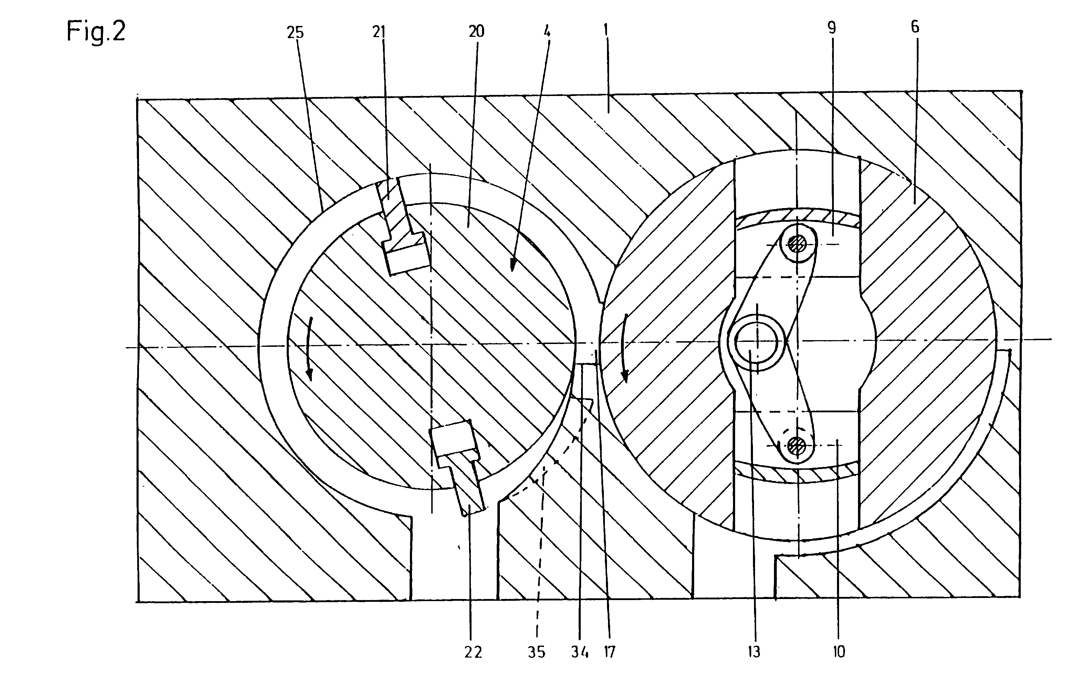

Fig. 2 einen Schnitt durch die Verbrennungskraftmaschine entsprechend Fig. 1, jedoch mit einer anderen Stellung der Kolbenführung und der Turbine,
Fig. 3 einen Schnitt durch die erfindungsgemäße Verbrennungskraftmaschine entlang der Linie III-III in Fig. 1 und
Fig. 4 eine weitere Ausführungsform der Erfindung in einem Fig. 3 entsprechenden Schnitt.

Wie aus den Zeichnungen ersichtlich ist, besteht die erfindungsgemäße Verbrennungskraftmaschine aus einem Gehäuse 1, in dem nebeneinander eine Kolbenkammer 2 und eine Turbinenkammer 3 angeordnet sind.

Die Kolbenkammer 2 besitzt eine kreiszylindrische Form und ist radial durch eine Wand 5 begrenzt. In der Kolbenkammer 2 ist eine Kolbenführung 6 aufgenommen, die einen kreiszylindrischen Umfang mit einem Durchmesser aufweist, der geringfügig kleiner als der Durchmesser der Kolbenkammer 2 ist.

Die Kolbenführung 6 weist zwei einander diametral gegenüberliegende Zylinderbohrungen 7, 8 auf, in denen Kolben 9, 10 geführt sind. Die Kolben 9, 10 sind über Pleuelstangen 11, 12 mit einem ortsfesten Lager 13 verbunden, das exzentrisch in der Kolbenkammer angeordnet ist.

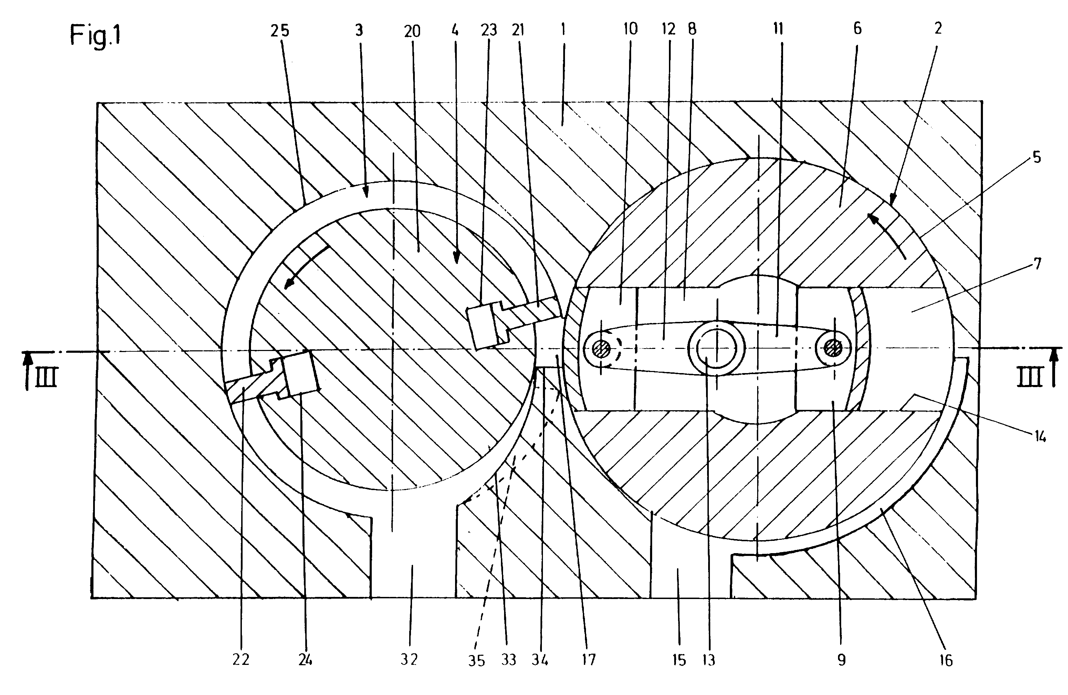

Wird die Kolbenführung 6 in Pfeilrichtung gedreht, so bewegt sich der Kolben 9 ausgehend von der in Fig. 1 gezeigten Stellung relativ zur Kolbenführung 6 immer weiter nach außen, bis er die radial äußerste Stellung erreicht hat, wie dies für den Kolben 10 in Fig. 1 dargestellt ist. Der zwischen der Wand 14 des Zylinders 7, dem Kolben 9 und der Wand 5 der Kolbenkammer 2 eingeschlossene Kompressionsraum weist in der in Fig. 1 dargestellten Stellung das größte Volumen auf.

Im Gehäuse 1 ist zur Zufuhr von Brennstoff, z.B. einem Benzin-Luft-Gemisch, zur Kolbenkammer 2 eine Ansaugöffnung 15 vorgesehen, die sich über einen Kanal 16 bis in den Bereich erstreckt, in dem die Kolben 9, 10 ihre bezüglich der Kolbenführung 6 radial innerste Stellung aufweisen, so daß sich der Kompressionsraum mit dem Brennstoffgemisch füllen kann.

In jenem Bereich, in dem die Kolben 9, 10 ihre radial äußerste Stellung einnehmen (in Fig. 1 der Kolben 10), weist die Kolbenkammer 2 eine Öffnung 17 zur Turbinenkammer 3 auf. Wird die Kolbenführung 6 in Pfeilrichtung entgegen dem Uhrzeigersinn gedreht, so bewegt sich z.B. der Kolben 9 von der in Fig. 1 dargestellten Stellung aus relativ zur Kolbenführung 6 nach außen, so daß der Kompressionsraum ständig verkleinert wird, bis sich der Kolben 9 im Bereich der Öffnung 17 befindet und seine radial äußerste Stellung erreicht. In diesem Moment kann z.B. das Zünden des Brennstoff-Luft-Gemisches auf übliche Weise, z.B. durch eine Zündkerze, erfolgen.

In der Turbinenkammer 3 der Turbine 4 ist ein Flügelzellenrad 20 vorgesehen, in dem zwei einander diametral gegenüberliegende Lamellen 21, 22 in Führungen 23, 24 radial verschiebbar sind und mit ihrer Außenseite an der zylindrischen Wand 25 der Turbinenkammer 3 anliegen. Um ein ständiges Anliegen der Lamellen 21, 22 an der Wand 25 zu gewährleisten, kann z.B. vorgesehen sein, daß die Lamellen 21, 22 gemäß einer nicht dargestellten Ausführungsform von Federn nach außen gedrückt werden.

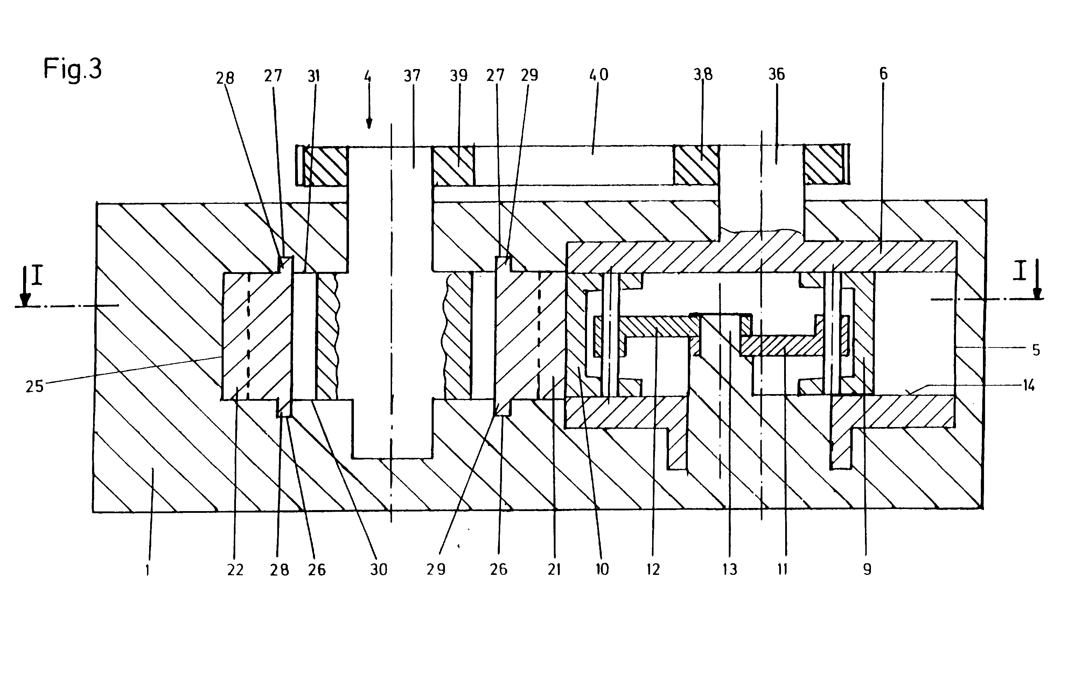

Wie insbesondere aus Fig. 3 ersichtlich, kann dies aber auch über eine Nutenführung 26, 27 erfolgen, die in den Stirnwänden 30, 31 der Turbinenkammer 3 einander spiegelbildlich gegenüberliegend vorgesehen sind. Dazu sind an den Lamellen 21, 22 seitlich Vorsprünge 28, 29 vorgesehen, die in die Nuten 26, 27 eingreifen. Die Nuten 26, 27 können dabei mit den Vorsprüngen 28, 29 eine Gleitführung bilden. Es kann aber auch gemäß einer nicht dargestellten Ausführungsform vorgesehen sein, daß an den Vorsprüngen 28, 29 Rollen gelagert sind, die in den Nuten 26, 27 geführt sind, wodurch der Reibungswiderstand und der Verschleiß verringert wird.

Im Gehäuse 1 ist eine Auslaßöffnung 32 für die expandierten Verbrennungsgase aus der Turbinenkammer 3 vorgesehen. In Drehrichtung des Flügelzellenrades 20 von der Öffnung 17 ausgehend weist die Wand 25 der Turbinenkammer 3 bis zur Auslaßöffnung 32 einen kreiszylindrischen Umfang auf. Der Radius der Wand 25 verringert sich dann aber im Bereich 33 zwischen der Auslaßöffnung 32 und der Öffnung 17 im wesentlichen kontinuierlich, bis er etwa den Außendurchmesser des Flügelzellenrades 20 erreicht hat.

Entsprechend dieser Verringerung des Durchmessers bewegen sich die Lamellen 21, 22 von den Führungsnuten 26, 27 geführt radial nach innen, um dann im Bereich der Öffnung 17 wieder nach außen geführt zu werden, bis sie nach der Öffnung 17 wieder an der Wand 25 der Turbinenkammer 3 anliegen. Die Wand 25 bildet somit im Bereich der Öffnung 17 einen Vorsprung 34. Im Bereich 33 ist ein Überströmkanal 35 vorgesehen, der von der Auslaßöffnung 32 ausgehend bis kurz vor den Vorsprung 34 reicht und verhindert, daß Gas zwischen der Lamelle 21 oder 22, dem Flügelzellenrad 20 und der Wand 25 im Bererich 33 komprimiert wird, wenn die Lamelle 21 oder 22 diesen Bereich passiert.

Wenn das zwischen der Lamelle 21, dem Flügelzellenrad 20, dem Vorsprung 34 und dem Kolben 10 eingeschlossene und komprimierte Brennstoff-Luft-Gemisch gezündet wird, dann wird das Flügelzellenrad 20 entgegen dem Uhrzeigersinn angetrieben, wobei sich die Kolbenführung 6, die mit der Turbine 4 über ein in Fig. 3 dargestelltes Getriebe gekuppelt ist, gleichfalls weiterdreht. Das Flügelzellenrad 20 und die Kolbenführung 6 machen jeweils eine halbe Umdrehung, bis sich der Kolben 9 im Bereich der Öffnung 17 befindet und mit der Lamelle 22, dem Flügelzellenrad 20 und dem Vorsprung 34 neuerlich ein Brennstoff-Luft-Gemisch einschließt und nach dessen Zündung das Flügelzellenrad 20 über die Lamelle 22 antreibt. Nach einer kurzen weiteren Drehbewegung des Flügelzellenrades 20 erreicht die Lamelle 21 die Auslaßöffnung 32 und das im wesentlichen expandierte Verbrennungsgas kann durch diese Öffnung 32 ausströmen.

In Fig. 3 ist eine Ausführungsform eines Getriebes dargestellt, mittels dem die Kolbenführung 6 und die Turbine 4 miteinander verbunden sind. Die Kolbenführung 6 und die Turbine 4 weisen jeweils einen Achsstummel 36, 37 auf, die aus dem Gehäuse 1 ragen. Auf diesen Achsstummeln 36, 37 sind Zahnräder 38, 39 befestigt, die z.B. über einen Zahnriemen 40, eine Kette od. dgl. miteinander verbunden sind. Es ist natürlich auch möglich, ein Zahnradgetriebe vorzusehen, wobei sich aus dem Übersetzungsverhältnis dieses Getriebes das Drehzahlverhältnis der Kolbenführung 6 und der Turbine 4 bestimmt.

Anstatt der Steuerung der Kolben 9, 10 über Pleuelstangen 11, 12 und ein ortsfestes Lager 13 ist es selbstverständlich auch möglich, dies z.B. über eine Nutenführung, ähnlich wie die der Turbine 4 oder andere geeignete Einrichtungen, vorzusehen.

Weiters ist es auch möglich, anstatt der dargestellten Ausführungsform mit zwei Kolben und zwei Lamellen eine Ausführungsform mit nur einem Kolben und einer Lamelle oder mit drei oder mehreren Kolben und Lamellen herzustellen.

In einer Weiterbildung der Erfindung kann es auch möglich sein, den Ansaugkanal 15 entgegen der Drehrichtung der Kolbenführung 6 weiter zur Öffnung 17 zu verlegen oder einen entsprechenen Kanal vorzusehen, um zu vermeiden, daß zwischen den Kolben und der Wand 5 der Kolbenkammer 2 ein Unterdruck entsteht, wenn dieser nach der Öffnung 17 radial nach innen geführt wird.

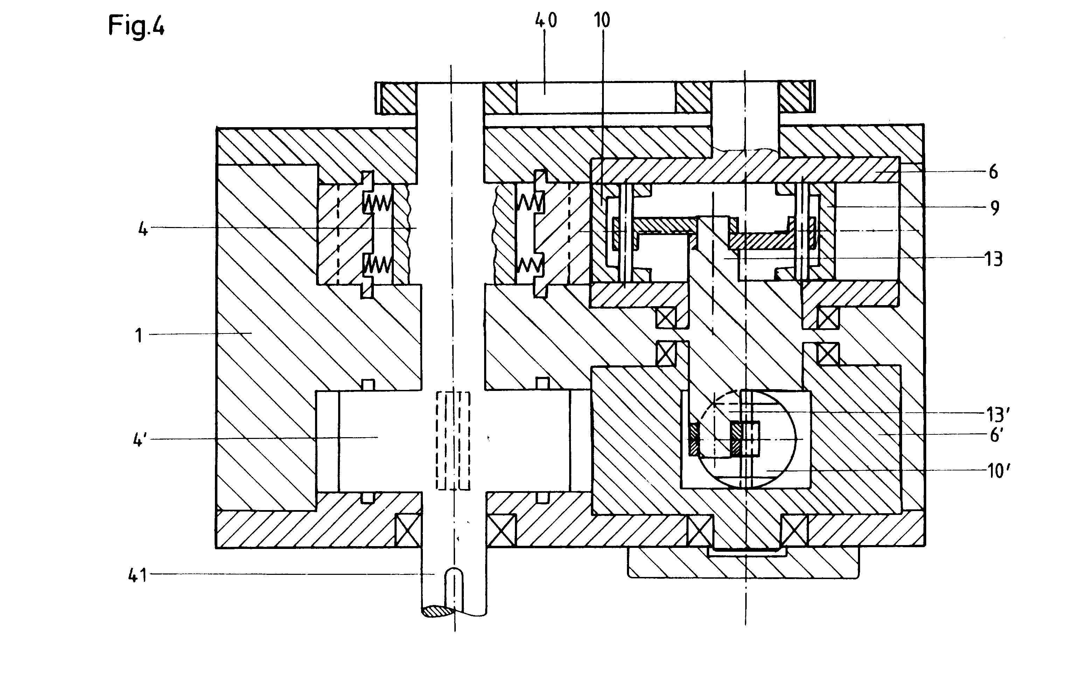

In Fig. 4 ist eine Ausführungsform der Verbrennungskraftmaschine dargestellt, bei der koaxial nebeneinander zwei Kolbenführungen 6, 6' und zwei Turbinen 4, 4' angeordnet und drehfest miteinander gekuppelt sind. Die Kolbenführung 6' ist gegenüber der Kolbenführung 6 in Drehrichtung um 90° versetzt. Ebenso sind die Turbinen 4 und 4' zueinander um 90° versetzt. Die beiden Kolbenführungen sind auf nicht dargestellte Weise miteinander gekuppelt. Dies kann beispielsweise wie bei der Kolbenführung 6 und der Turbine 4 über einen Zahnriemen 40 erfolgen. Dadurch ergibt sich ein ruhigerer Lauf der Verbrennugnskraftmaschine.

Zusammenfassend kann die Erfindung beispielsweise wie folgt dargestellt werden:

Die Verbrennungskraftmaschine weist eine im wesentlichen zylindrische Kolbenkammer 2 auf, in der eine Kolbenführung 6 gelagert ist, die zwei im wesentlichen radial ausgerichtete, einander gegenüberliegende Zylinderbohrungen 7, 8 aufweist. In den Zylinderbohrungen 7, 8 sind Kolben 9, 10 geführt, die mit der Wand 14 der Zylinderbohrungen 9, 10 und der Wand 5 der Kolbenkammer 2 zumindest phasenweise, d.h. in Abhängigkeit vom Drehwinkel, einen Kompressionsraum einschließen. Die Kolben 9, 10 werden beim Drehen der Kolbenführung 6 periodisch radial hin- und herbewegt.

Mit der Kolbenkammer 2 ist eine Turbinenkammer 3 über eine Öffnung 17 verbunden. In der Turbinenkammer 3 ist eine Turbine 4 drehbar gelagert, die ein Flügelzellenrad 20 mit zwei radial verschiebbaren Lamellen aufweist, wobei sich die Lamellen 21, 22 vor der Öffnung 17 radial weiter innen befinden als nach der Öffnung 17.

Die Turbine 4 ist mit der Kolbenführung 6 über ein Getriebe 38, 39, 40 verbunden.

## Patentansprüche

1. Verbrennungskraftmaschine, mit einer im wesentlichen zylindrischen Kolbenkammer (2), in der eine Kolbenführung (6) mit wenigstens einer im wesentlichen radial ausgerichteten Zylinderbohrung (7, 8) drehbar gelagert ist, mit wenigstens einem Kolben (9, 10), der in der Zylinderbohrung (7, 8) geführt ist und mit der Wand (14) der Zylinderbohrung (7, 8) und der Wand (5) der Kolbenkammer (2) zumindest phasenweise einen Kompressionsraum einschließt, mit einer Einrichtung (11, 12, 13), über welche der Kolben (9, 10) beim Drehen der Kolbenführung (6) periodisch hin- und herbewegt wird, und mit einer mit der Kolbenführung (6) über ein Getriebe (38, 39, 40) verbundenen Turbine (4), die von Verbrennungsgasen aus einem Brennraum angetrieben wird, dadurch gekennzeichnet, daß in der Kolbenkammer (2) exzentrisch ein ortsfestes Lager (13) vorgesehen ist, mit dem der Kolben (9, 10) über eine Pleuelstange (11, 12) verbunden ist.

2. Verbrennungskraftmaschine nach Anspruch 1, dadurch gekennzeichnet, daß die Turbine (4) ein Flügelzellenrad (20) mit wenigstens einer radial verschiebbaren Lamelle (21, 22) aufweist.

3. Verbrennungskraftmaschine nach Anspruch 1 oder 2, dadurch gekennzeichnet, daß in der Wand (5) der Kolbenkammer (2) in jenem Bereich eine Öffnung (17) zur Turbine (4) vorgesehen ist, in dem sich der Kolben (9, 10) radial am weitesten außen befindet und daß sich die Lamelle ( 21, 22) der Turbine (4) in Drehrichtung vor der Öffnung (17) radial weiter innen befindet als nach der Öffnung (17).

4. Verbrennungskraftmaschine nach einem der Ansprüche 1 bis 3, dadurch gekennzeichnet, daß zwei einander diametral gegenüberliegende Kolben (9, 10) vorgesehen sind.

5. Verbrennungskraftmaschine nach einem der Ansprüche 2 bis 4, dadurch gekennzeichnet, daß die Anzahl der Lamellen (21, 22) der Anzahl der Kolben (9, 10) entspricht.

6. Verbrennungskraftmaschine nach einem der Ansprüche 1 bis 5, dadurch gekennzeichnet, daß der Radialabstand zwischen der Achse des Lagers (13) und der Wand (5) der Kolbenkammer (2) im Bereich der Öffnung (17) zur Turbine (4) am kleinsten ist.

7. Verbrennungskraftmaschine nach einem der Ansprüche 2 bis 6, dadurch gekennzeichnet, daß in den Stirnwänden (30, 31) der Turbinenkammer (3) Nutenführungen (26, 27) vorgesehen sind, in welche seitliche Vorsprünge (28, 29) der Lamelle (21, 22) eingreifen.

8. Verbrennungskraftmaschine nach Anspruch 7, dadurch gekennzeichnet, daß an den Vorsprüngen (28, 29) Rollen gelagert sind, die in die Nuten (26, 27) eingreifen.

9. Verbrennungskraftmaschine nach einem der Ansprüche 3 bis 8, dadurch gekennzeichnet, daß in der Wand (5) der Kolbenkammer (2) in Drehrichtung nach der Öffnung (17) zur Turbine (4) eine Ansaugöffnung (15) vorgesehen ist, die sich bis in den Bereich erstreckt, in dem sich der Kolben (9, 10) radial am weitesten innen befindet.

10. Verbrennungskraftmaschine nach einem der Ansprüche 3 bis 9, dadurch gekennzeichnet, daß im Bereich der Öffnung (17) zur Turbine (4) eine Zündeinrichtung angeordnet ist.

11. Verbrennungskraftmaschine nach einem der Ansprüche 1 bis 10, dadurch gekennzeichnet, zwei Kolbenführungen (6, 6'), die koaxial angeordnet sind, und zwei Turbinen (4, 4'), die koaxial angeordnet und drehfest miteinander verbunden sind, vorgesehen sind, und daß die Kolbenführungen (6, 6') und die Turbinen (4, 4') in Drehrichtung jeweils um 90° zueinander versetzt sind.

## Claims

1. An internal combustion engine, characterized by a substantially cylindrical piston chamber (2) in which is swivel-mounted a piston guide (6) having at least one essentially radial cylindrical bore (7, 8), at least one piston (9, 10), which is guided in cylindrical bore (7, 8) and encloses a combustion chamber with wall (14) of cylindrical bore (7, 8) and wall (5) of piston chamber (2) at least in a phased manner, a device (11, 12. li) by means of which piston (9, 10) is moved back and forth periodically when piston guide (6) is rotated, and a turbine (4) connected to piston guide (6) by means of a gear (38, 39, 40), which is driven out of the combustion chamber by combustion gases.

2. Internal combustion engine as claimed in Claim 1, characterized in that turbine (4) has an impeller wheel (20) with at least one radially displaceable blade (21, 22).

3. Internal combustion engine as claimed in Claim 1 or 2, characterized in that an opening (17) to turbine (4) is provided in wall (5) of piston chamber (2) in the vicinity where piston (9, 10) is externally at its farthest extent radially, and in that blade (21, 22) of turbine (4) is situated in the direction of rotation radially more inwards before opening (17) than after opening (17).

4. Internal combustion engine as claimed in any one of Claims 1 to 3, characterized in that two diametrically opposite pistons (9, 10) are provided.

5. Internal combustion engine as claimed in any one of Claims 2 to 4, characterized in that the number of blades (21, 22) corresponds with the number of pistons (9, 10).

6. Internal combustion engine as claimed in any one of Claims 1 to 5. characterized in that the radial distance between the axis of bearing (13) and wall (5) of piston chamber (2) is smallest in the vicinity of opening (17) to turbine (4).

7. Internal combustion engine as claimed in any one of Claims 2 to 6, characterized in that retaining slots (26, 27) are provided in front walls (30, 31) of turbine chamber (3), in which lateral cams (28, 29) of blade (21, 22) engage.

8. Internal combustion engine as claimed in Claim 7, characterized in that rollers can be mounted on cams (28, 29), which engage in grooves (26, 27).

9. Internal combustion engine as claimed in any one of Claims 3 to 8, characterized in that provided in wall (5) of piston chamber (2) in the direction of rotation after opening (17) to turbine (4) is a suction port (15) which extends to the area where pistons (9, 10) are at their radially innermost position.

10. Internal combustion engine as claimed in any one of Claims 3 to 9, characterized in that an ignition device is disposed in the vicinity of opening (17) to turbine (4).

11. Internal combustion engine as claimed in any one of Claims 1 to 10, characterized in that two coaxially disposed piston guides (6, 6') and two axially disposed and rotatably interconnected turbines (4, 4') are provided, and in that and piston guides (6, 6) and turbines (4, 4') are each offset by 90° in the direction of rotation.

## Revendications

1. Moteur à combustion interne comprenant une chambre à piston (2) essentiellement cylindrique dans laquelle est monté mobile en rotation un guide de piston (6) présentant au moins un alésage de cylindre (7, 8) orienté de façon essentiellement radiale, au moins un piston (9, 10) guidé dans l'alésage de cylindre (7, 8) et définissant au moins par phases une chambre de compression avec la paroi (14) de l'alésage de cylindre (7, 8) et avec la paroi (5) de la chambre à piston (2), un dispositif (11, 12, 13) par lequel le piston (9, 10), lors de la rotation du guide de piston (6), est déplacé périodiquement en va-et-vient, et une turbine (4) qui est reliée par une transmission (38, 39, 40) au guide de piston (6) et qui est entraînée par des gaz de combustion provenant d'une chambre de combustion, caractérisé par le fait que dans la chambre à piston (2) est prévu, en position excentrique, un palier stationnaire (13) auquel le piston (9, 10) est relié par une bielle (11, 12).

2. Moteur à combustion interne suivant la revendication 1, caractérisé par le fait que la turbine (4) présente une roue à palettes (20) comprenant au moins une palette (21, 22) mobile en translation radiale.

3. Moteur à combustion interne suivant la revendication 1 ou 2, caractérisé par le fait que la paroi (5) de la chambre à piston (2) présente une ouverture (17) allant à la turbine (4), dans la zone dans laquelle le piston (9, 10) se trouve situé le plus loin radialement vers l'extérieur, et que la palette (21, 22) de la turbine (4) est située radialement plus loin vers l'intérieur avant l'ouverture (17) qu'après l'ouverture (17), dans le sens de rotation.

4. Moteur à combustion interne suivant l'une des revendications 1 à 3, caractérisé par le fait qu'il comprend deux pistons (9, 10) diamétralement opposés l'un à l'autre.

5. Moteur à combustion interne suivant l'une des revendications 2 à 4, caractérisé par le fait que le nombre des palettes (21, 22) correspond au nombre des pistons (9, 10).

6. Moteur à combustion interne suivant l'une des revendications 1 à 5, caractérisé par le fait que la distance radiale entre l'axe du palier (13) et la paroi (5) de la chambre à piston (2) est la plus petite dans la zone de l'ouverture (17) allant à la turbine (4).

7. Moteur à combustion interne suivant l'une des revendications 2 à 6, caractérisé par le fait que les parois frontales (30, 31) de la chambre de turbine (3) présentent des guides (26, 27) en forme de rainures, dans lesquels sont engagées des saillies latérales (28, 29) de la palette (21, 22).

8. Moteur à combustion interne suivant la revendication 7, caractérisé par le fait que les galets engagés dans les rainures (26, 27) sont montés en rotation sur les saillies (28, 29).

9. Moteur à combustion interne suivant l'une des revendications 3 à 8, caractérisé par le fait que la paroi (5) de la chambre à piston (2) présente, dans le sens de rotation après l'ouverture (17) allant à la turbine (4), une ouverture d'admission (15) qui s'étend jusque dans la zone dans laquelle le piston (9, 10) est situé le plus loin radialement vers l'intérieur.

10. Moteur à combustion interne suivant l'une des revendications 3 à 9, caractérisé par le fait qu'un dispositif d'allumage est disposé dans la zone de l'ouverture (17) allant à la turbine (4).

11. Moteur à combustion interne suivant l'une des revendications 1 à 10, caractérisé par le fait que deux guides de piston (6, 6') sont disposés coaxialement et deux turbines (4, 4') sont disposées coaxialement et sont solidaires en rotation l'une de l'autre, et que les guides de piston (6, 6') et les turbines (4, 4') sont décalés respectivement de 90° dans le sens de rotation.
